Europäisches Patentamt

European Patent Office

Office européen des brevets

(11) Numéro de publication: **0 251 884 B1**

(12) **FASCICULE DE BREVET EUROPEEN**

(45) Date de publication du fascicule du brevet:
09.05.90

(51) Int. Cl.⁵: **F16H 25/20, B66B 13/08**

(21) Numéro de dépôt: 87401425.1

(22) Date de dépôt: 23.06.87

(54) **Dispositif de commande de la translation simultanée de plusieurs organes à des vitesses différentes et application de celui-ci à la commande de volets téléscopiques.**

(30) Priorité: 01.07.86 FR 8609521

(43) Date de publication de la demande:
07.01.88 Bulletin 88/1

(45) Mention de la délivrance du brevet:
09.05.90 Bulletin 90/19

(84) Etats contractants désignés:
BE CH DE ES FR GB IT LI NL SE

(56) Documents cités:
DE-C- 200 481
US-A- 3 150 535

(73) Titulaire: **Gallais, Philippe, 13 rue des Hêtres,
F-91540 MENNECY(FR)**

(72) Inventeur: **Gallais, Philippe, 13 rue des Hêtres,
F-91540 MENNECY(FR)**

**Description**

L'invention concerne un dispositif de commande de la translation simultanée de plusieurs organes, entrainés respectivement à des vitesses différentes.

L'invention trouve son application, par exemple, dans l'entraînement de volets télescopiques tels que ceux utilsés pour la fermeture de la baie de cabine des ascenseurs ou monte-charge.

Un dispositif de commande de la translation de plusieurs organes est connu de l'état de la technique, par exemple dans le dispositif d'entraînement d'une porte à trois vantaux télescopiques installée sur certaines cabines d'ascenseurs; ce dispositif connu comprend :
- un système de réduction réalisé par poulies et courroies,
- un système de bielle et manivelle pour assurer la transformation du mouvement de rotation en mouvement d'entraînement du vantail rapide,
- un ensemble de quatre moufles à câble pour entraîner dans les deux sens et aux vitesses judicieuses, le vantail intermédiaire et le vantail lent,
- un ensemble de trois rails sur lesquels roulent trois chariots à galets et contre-galets supportant les trois vantaux .

Le dispositif connu assure donc les fonctions de :
- réducteur de vitesse,
- transformation d'une rotation en translation,
- répartition des mouvements linéaires,
- guidage des organes en translation .
Soit, quatre fonctions au moyen de plusieurs systèmes associés .

Ce dispositif connu présente de ce fait les inconvénients suivants :

a) La pluralité des systèmes réalisant le dispositif connu entraîne une complexité mécanique,
- pour la réalisation de chaque système,
- pour le montage de chaque système,
- pour l'assemblage des systèmes entre eux,
- pour la mise au point et les réglages de l'ensemble ;
b) Ce dispositif est dès lors coûteux en matière première et en main d'œuvre;
c) Ce dispositif d'entraînement est encombrant;
d) La complexité des différents systèmes diminue la fiabilité de l'ensemble et augmente de ce fait le coût de la maintenance.

La présente invention propose un dispositif qui permet de s'affranchir de ces inconvénients en réduisant les coûts de fabrication, de montage et de maintenance, en réduisant l'encombrement et la masse de l'ensemble, en augmentant la fiabilité du système.

Selon l'invention, ce but est atteint au moyen d'un dispositif remplissant les mêmes fonctions que celui cité au début de la description et caractérisé en ce que la commande de la translation est obtenue au moyen d'une vis menante conforme à la revendication 1. Cette vis entraîne par sa rotation, la translation simultanée de deux ou plusieurs écrous, à des vitesses proportionnelles à leur pas respectif. Les filetages imbriqués de la vis, permettent par les parties évidées, les passages successifs dans un même zone de la vis, de ces deux ou plusieurs écrous de pas différents. Les efforts de translation sont communiqués aux différents écrous par les flancs hélicoïdaux des parties pleines des filetages de la vis et le guidage en translation de ces écrous est assuré par les parties cylindriques des sommets des filets de la vis qui forment une enveloppe cylindrique de section constante de bout en bout. Ainsi, la vis qui est guidée à ses extrémités par des paliers, sert de support aux organes de translation par l'intermédiaire des écrous rendus solidaires de ces organes par assemblage.

On connaît par le document DE-C 200 481 une vis conforme au préambule de la revendication 1, c'est-à-dire comportant au moins deux filetages de pas différent. Mais, ces filetages sont superposés, et non pas faits de filets enchevêtrés et croisés comme selon l'invention; de plus la surface extérieure de la vis, qui comporte un filetage fin superficiel n'est pas cylindrique. Une telle vis connue est donc impropre à servir à la translation simultanée de plusieurs organes en assurant en même temps le guidage desdits organes.

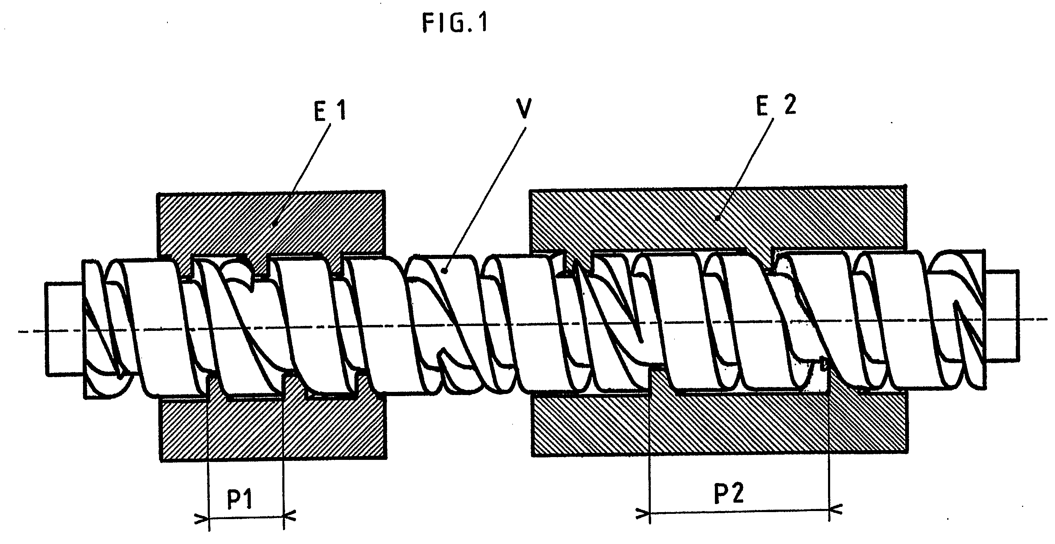

Le dessin de la figure 1 représente schématiquement un exemple de réalisation à une vis et deux écrous; la vis (V) est représentée en vue de face avec le détail de deux filetages imbriqués à un filet de type "carré", dont les pas apparents des hélices sont respectivement: ($P_1$) et ($P_2$), les écrous ($E_1$) et ($E_2$) de pas correspondant, sont représentés en coupe. Pour faciliter la compréhension des formes, le chanfrein des pointes tranchantes apparaissant aux intersections des filets de la vis a été volontairement omis.

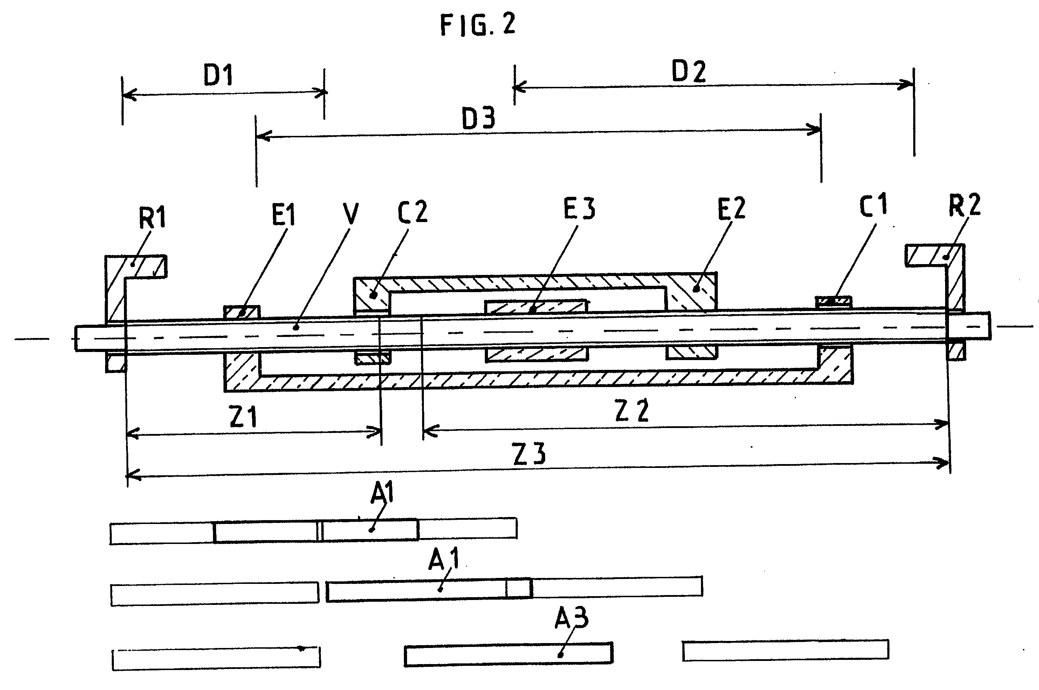

Le dispositif objet de la présente invention trouve un exemple d'application dans l'entraînement d'une porte téléscopique à trois vantaux. Il est représenté schèmatiquement par la figure 2, une vis (V) en acier nitruré de 40 mm de diamètre, comporte sur une longueur de 960 mm environ un ensemble de trois filetages imbriqués de type " trapèzoïdal" à 30°. La zone (Z3) de la vis (V) est filetée au pas de 60 mm, et les zones (Z1) et (Z2) respectivement au pas de 20 et 40 mm. Sur cette vis trois écrous en bronze (E1), (E2), (E3) filetés aux pas correspondants, se déplacent respectivement sur les zones (D1), (D2) et (D3). Les écrous (E1) et (E2) sont chacun solidaire d'un coulisseau correspondant (C1) et (C2) dont le guidage est assuré par les parties cylindriques des sommets de filets de la vis (V). Ces écrous (E1), (E2) et (E3) sont solidaires des vantaux respectifs (A1), (A2) et (A3). Cette vis (V), guidée à ses extrêmités par les paliers (R1) et (R2), est entraînée en rotation à 375 tours/minute, de cette manière, les trous écrous ainsi que les trois vantaux (A1), (A2) et (A3) qui leur sont associés se déplacent en translation aux vitesses respectives de: 0,125; 0,250 et 0,375 m/s . Par ailleurs, le pas de 60 mm sur l'écrou rapide permet la réversibilité du système en cas de défaillance électrique de l'entraînement. Chaque vantail a une largeur d'environ 240 mm, ce qui permet l'obturation d'une baie de 700 mm de largeur.

Pour certaines applications du dispositif objet de l'invention, les écrous peuvent être du type "à billes" out "à rouleaux".

L'invention apporte des solutions aux problèmes de transmissions coordonnées de mouvements avec encombrement réduit, masse minimale et augmentation de la fiabilité, notamment dans les domaines de la robotique, de l'aéronautique ou de l'aérospatiale.

**Revendications**

1. Dispositif destiné à la commande de la translation simultanée de plusieurs organes à des vitesses différentes qui comporte une vis (V) à au moins deux filetages de pas différentes $(P_1)$, $(P_2)$ sur laquelle se déplacent successivement au moins deux écrous de pas correspondant $(E_1)$, $(E_2)$, caractérisé en ce que:

les filets desdits deux filetages de la vis sont des filets à sommets plats et sont enchevêtrés l'un avec l'autre de sorte que les filets de l'un des filetages croisent les filets de l'autre filetage de même sens mais de pas différent; et en ce que la surface extérieure de la vis constituée par les sommets des filets présente une enveloppe cylindrique de section constante de bout en bout.

2. Dispositif selon la revendication 1, caractérisé en ce que le guidage en translation des écrous est assuré par les parties cylindriques des sommets de filets de la vis qui forment l'enveloppe cylindrique précitée.

3. Dispositif selon l'une des revendications 1 ou 2, caractérisé en ce que certains au moins des écrous $(E_1-E_2)$ sont chacun solidaire d'un coulisseau de guidage $(C_1-C_2)$ adapté à coulisser sur l'enveloppe extérieure cylindrique de la vis.

4. Dispositif selon l'une des revendications précédentes caractérisé en ce que la vis comporte trois filetages de pas différents dont les pas différents sont dans le rapport 1, 2, 3.

5. Dispositif selon la revendication 4 caractérisé en ce que le filetage au pas le plus grand s'étend sur une zone Z3 couvrant sensiblement toute la longueur de la vis; en ce que le filetage au par intermédiaire s'étend sur une zone Z2, plus courte que la zone Z3, partant de l'une des extrémités de la vis; en ce que le filetage au pas le plus petit s'étend sur une zone Z1, encore plus courte que la zone Z2, partant de l'autre extrémité de la vis.

6. Dispositif selon la revendication 5 caractérisé en ce que les zones Z1 et Z2 ne se recouvrent pas, grâce à quoi aucune partie de la vis ne porte plus de deux filetages imbriqués entre eux.

7. Dispositif selon l'une des revendications précédentes caractérisé en ce que les écrous $(E_1, E_2)$ sont des écrous à billes ou à rouleaux.

8. Commande de volets télescopiques, notamment de volets $(A_1, A_2, A_3)$ pour la fermeture de la baie de cabine des ascenseurs ou de monte-charge, caractérisée en ce qu'elle comporte un dispositif selon l'une quelconque des revendications précédentes et en ce que chaque écrou $(E_1, E_2, E_3)$ dudit dispositif est solidaire de l'un des volets $(A_1, A_2, A_3)$.

9. Commande de volets téléscopiques selon la revendication 8 caractérisée en ce que le filetage au pas le plus grand est choisi par rapport au diamètre de la vis suffisamment grand pour que le système soit réversible en cas de défaillance de l'entraînement électrique de la vis, par exemple un pas de 60 mm pour un diamètre de vis de 40 mm.

**Patentansprüche**

1. Steuereinrichtung zur gleichzeitigen Längsbewegung von mehreren Elementen mit verschiedenen Geschwindigkeiten mit einer Schraube (V) mit mindestens zwei Gewinden unterschiedlicher Steigung $(P_1, P_2)$, auf der sich nacheinander mindestens zwei Muttern entsprechender Steigung $(E_1, E_2)$ bewegen, dadurch gekennzeichnet, daß die Gewindegänge der beiden Schraubengewinde ein flaches Gewindeprofil aufweisen und miteinander verflochten sind, so daß die Gewindegänge eines der Gewinde die Gewindegänge des anderen Gewindes in gleicher Richtung, aber mit unterschiedlicher Steigung kreuzen, und daß die durch die Gewindeprofile gebildete äußere Oberfläche der Schraube eine zylinderförmige Hülle mit konstantem Querschnitt von einem Ende bis zum anderen aufweist.

2. Einrichtung nach Anspruch 1, dadurch gekennzeichnet, daß die Führung zur Längsbewegung der Muttern durch die zylindrischen Teile der Gewindeprofile der Schraube gewährleistet wird, die die zylindrische Hülle bilden.

3. Einrichtung nach einem der Ansprüche 1 oder 2, dadurch gekennzeichnet, daß zumindest einige der Muttern $(E_1, E_2)$ jeweils mit einem Führungsschlitten $(C_1 - C_2)$ fest verbunden sind, der so angepaßt ist, um auf der zylindrischen Außenhülle der Schraube zu gleiten.

4. Einrichtung nach einem der vorhergehenden Ansprüche, dadurch gekennzeichnet, daß die Schraube drei Gewinde unterschiedlicher Steigung umfaßt, deren unterschiedliche Steigungen im Verhältnis 1, 2, 3 zueinander stehen.

5. Einrichtung gemäß Anspruch 4, dadurch gekennzeichnet, daß sich das Gewinde mit der größten Steigung über einen Bereich Z3 erstreckt, der im wesentlichen die ganze Länge der Schraube abdeckt; daß sich das Gewinde mit der mittleren Steigung über einen Bereich Z2 erstreckt, der, ausgehend von einem Ende der Schraube, kürzer als der Bereich Z3 ist; daß sich das Gewinde mit der kleinsten Steigung über einen Bereich Z1 erstreckt, der, ausgehend vom anderen Ende der Schraube, noch kürzer als der Bereich Z2 ist.

6. Einrichtung nach Anspruch 5, dadurch gekennzeichnet, daß sich die Bereiche Z1 und Z2 nicht überlappen, wodurch kein Teil der Schraube mehr als zwei ineinander verflochtene Gewinde aufweist.

7. Einrichtung nach einem der vorhergehenden Ansprüche, dadurch gekennzeichnet, daß die Muttern $(E_1, E_2)$ mit Kugellagern oder Rollenlagern versehen sind.

8. Betätigung von teleskopischen Türblättern, insbesondere von Türblättern $(A_1, A_2, A_3)$ zum Schließen der Kabinenöffnung von Fahrstühlen oder Lastenaufzügen, gekennzeichnet durch eine Einrichtung gemäß einem der vorhergehenden Ansprüche und dadurch, daß jede Mutter $(E_1, E_2, E_3)$

dieser Einrichtung mit einem der Türblätter (A1, A2, A3) fest verbunden ist.

9. Betätigung von teleskopischen Türblättern gemäß Anspruch 8, dadurch gekennzeichnet, daß das Gewinde mit der größten Steigung entsprechend dem Durchmesser der Schraube ausreichend groß gewählt wird, damit das System bei Ausfall des elektrischen Antriebs der Schraube reversibel ist, zum Beispiel eine Steigung von 60 mm bei einem Schraubendurchmesser von 40 mm.

## Claims

1. Device for controlling the simultaneous translation of a plurality of elements at different speeds, comprising a screw (V), with at least two threadings having different pitches $(P_1)$, $(P_2)$, on which at least two successive bolts of corresponding pitches $(E_1)$, $(E_2)$ are mounted for movement, characterized in that the threads of the said two screw threadings are flat threads and are mutually overlapping so that the threads of one of the threadings cross the threads of the other threading of same winding direction but different pitch; and in that the external surface of the screw formed by the top portion of the flat threads has a cylindrical envelope of constant cross-section from one end to the other.

2. Device according to claim 1, characterized in that the nuts are guided in translation by the cylindrical portions of the top portions of the screw threads forming the cylindrical envelope aforesaid.

3. Device according to one of claims 1 or 2, characterized in that at least some of the nuts $(E_1-E_2)$ are each fixed to a guiding slide $(C_1-C_2)$ adapted for sliding on the external cylindrical envelope of the screw.

4. Device according to any of the preceding claims, characterized in that the screw is provided with three threadings of different pitches being in the ratio 1, 2, 3.

5. Device according to claim 4, characterized in that the threading with the greatest pitch extends over a zone Z3 covering substantially the full length of the screw; in that the threading with the intermediate pitch extends over a zone Z2, shorter than the zone Z3, beginning at one of the screw ends; and in that the threading with the smallest pitch extends over a zone Z1, still shorter that the zone Z2, beginning at the other screw end.

6. Device according to claim 5, characterized in that zones Z1 and Z2 do not overlap, whereby no portion of the screw has more than two threadings overlapping.

7. Device according to one of the preceding claims, characterized in that the nuts $(E_1, E_2)$ are ball nuts or roll nuts.

8. Control device for telescoping shutters, in particular shutters (A1, A2, A3) for closing the door of a lift car, characterized in that it comprises a device according to anyone of the preceding claims, and in that each nut $(E_1, E_2, E_3)$ of said device is fixed to one of said shutters (A1, A2, A3).

9. Control device for telescoping shutters according to claim 8, characterized in that the threading with the greatest pitch is selected great enough with regard to the diameter of the screw for rendering the system reversible in case of failure of the electrical driving of the screw, for example a pitch of 60 mm for a screw diameter of 40 mm.

# FIG.1

E 1    V    E 2

P1    P2

EP 0 251 884 B1

# FIG. 2

EP 0 251 884 B1